# EUROPEAN PATENT APPLICATION

(11) **EP 4 706 393 A2**
(43) Date of publication of application: **11.03.2026**
(21) Application number: 26152342.7
(22) Date of filing: 20.09.2021
(51) Int. Cl.: A01P 13/00

(54) **STABLE HERBICIDAL COMPOSITIONS**

(30) Priority: 21.09.2020 GB 202014871
(62) Divisional of application: 21197613.9
(71) Applicant: UPL Corporation Limited, Port Louis (MU); UPL Europe Ltd, Warrington, Cheshire WA3 6YN (GB)
(72) Inventor: PIROTTE, Alan, 6660 Houffalize (BE); HAWKINS, Emma Louise, Evesham, WR11 2LS (GB)
(74) Representative: J A Kemp LLP

(57) **Abstract**

Described herein are stable herbicidal compositions including at least one cyclohexanedione oxime herbicide or an agriculturally acceptable salt thereof; and a stabilizer system comprising a dialkyl metal sulfosuccinate and a sorbitan fatty acid ester. A process of preparing the stable herbicidal composition and a method of controlling weeds by applying the stable herbicidal composition onto a weed, a crop, a locus, or a habitat area are also disclosed.

## Description

### Field of the Invention:

The present disclosure relates to stable herbicidal compositions. The present disclosure more particularly relates to stable herbicidal compositions including a cyclohexenedione oxime herbicide and a stabilizer system. The present disclosure further relates to a process of preparing the stable herbicidal compositions and to methods of controlling weeds.

### Background

Cyclohexanedione oxime herbicides (CHD), which are effective at relatively low doses and are readily decomposed, have been developed to reduce herbicide impact on the environment. CHD herbicides have herbicidal activity against a variety of post-emergent grass weeds. With regard to the persistence in the environment, CHD herbicides are susceptible to rapid degradation through biotic and abiotic processes. For example, these herbicides are decomposed at a pH of less than 5 and greater than 10 and are photochemically and thermally unstable. Furthermore, these compounds are readily degraded through microbial and plant metabolism. Examples of CHD herbicides include clethodim, sethoxydim, cycloxydim, alloxydim, tralkoxydim, tepraloxydim, clefoxydim, clefoxyfim, butroxydim, and profoxydim.

Clethodim is an important commercial herbicide within the class of CHDs. It is a selective post-emergence CHD herbicide used to control annual and perennial grasses in a wide variety of broad leaf crops such as soybeans, cotton, flax, peanuts, sunflowers, sugarbeets, potatoes, alfalfa, and most vegetables.

Herbicidal compositions comprising clethodim as an active ingredient are difficult to formulate, since clethodim is chemically unstable. The presence of adjuvant materials, surfactants, and even water, for example, can lead to significant chemical degradation of clethodim in an herbicidal composition.

It has been found that the long-term stability of an herbicidal formulation containing a CHD, especially clethodim, is challenging and there remains a need to develop a stable composition comprising a CHD in which the compound's rate of degradation is controlled and its concentration is maintained over a longer period of time. Hence, developing a physically and chemically stable composition, which has excellent stability during preparation, storage, and application process of the herbicidal composition is highly desirable.

### SUMMARY

In an aspect, the present disclosure provides a stable herbicidal composition comprising,
at least one cyclohexenedione oxime herbicide or an agriculturally acceptable salt thereof; and
a stabilizer system comprising a dialkyl metal sulfosuccinate and a non-ionic surfactant.

In an aspect, the non-ionic surfactant comprises a sorbitan fatty acid ester.

In an aspect, the cyclohexenedione oxime herbicide comprises clethodim.

In another aspect, the present disclosure provides a stabilizer system comprising a dialkyl metal sulfosuccinate and a non-ionic surfactant in a ratio of 1:10 to 10:1, more preferably in a ratio of 1:5 to 5:1.

In yet another aspect, the present disclosure provides a process of preparing a stable herbicidal composition comprising at least one cyclohexenedione oxime herbicide or an agriculturally acceptable salt thereof, and a stabilizer system comprising a dialkyl metal sulfosuccinate, a non-ionic surfactant in a ratio from 1:5 to 5:1, wherein said process comprises mixing the cyclohexenedione oxime herbicide with the stabilizer system to produce a stable herbicidal composition.

In an aspect, the non-ionic surfactant comprises a sorbitan fatty acid ester. In an aspect, the cyclohexenedione oxime comprises clethodim.

In yet another aspect, the present disclosure provides a process of preparing a stable herbicidal composition comprising:
providing a stabilizer system comprising a dialkyl metal sulfosuccinate, a non-ionic surfactant, and a solvent, and optionally, one or more auxiliary ingredients; and
adding a cyclohexenedione oxime or agriculturally acceptable salt thereof to the stabilizer system to obtain a stabilized composition.

In another aspect, the present disclosure provides a method of controlling weeds, the method comprising applying an effective amount of a herbicidal composition to a weed, a crop, a locus, or a habitat area, the herbicidal composition comprising:
at least one cyclohexenedione oxime herbicide or an agriculturally acceptable salt thereof; and
a stabilizer system comprising a dialkyl metal sulfosuccinate and a non-ionic surfactant in a ratio from 1:10 to 10:1.

In another aspect, the present disclosure provides the use of a stable herbicidal composition disclosed herein to control a wide range of weeds.

In another aspect, the present disclosure provides a kit. The kit comprises a plurality of components, each of which components may include at least one, or more, of the ingredients of the stable herbicidal composition of the present disclosure.

### DETAILED DESCRIPTION

The present disclosure provides stable herbicidal compositions including cyclohexenedione oxime herbicides.

It is one more object of the present disclosure to provide a stable herbicidal composition of clethodim, which has efficient clethodim recovery.

It is another object of the present disclosure to provide a process of preparing stable herbicidal compositions comprising a cyclohexenedione oxime compound.

It is yet another object of the present disclosure to provide a method of using stable herbicidal compositions comprising a cyclohexenedione oxime compound onto weeds.

For the purposes of the present disclosure, it is to be understood that the invention may assume various alternative variations and step sequences, except where expressly specified to the contrary. Moreover, other than in any operating examples, or where otherwise indicated, all numbers expressing, for example, quantities of materials/ingredients used in the specification are to be understood as being modified in all instances by the term "about".

Thus, before describing the present disclosure in detail, it is to be understood that this invention is not limited to particularly exemplified systems or process parameters that may of course, vary. It is also to be understood that the terminology used herein is for the purpose of describing particular embodiments of the invention only and is not intended to limit the scope of the invention in any manner. The use of examples anywhere in this specification including examples of any terms discussed herein is illustrative only, and in no way limits the scope and meaning of the invention or of any exemplified term.

Prior to setting forth the present subject matter in detail, it may be helpful to provide definitions of certain terms used herein. Unless defined otherwise, all technical and scientific terms used herein have the same meaning as is commonly understood by one of skill in the art to which this subject matter pertains. The following definitions are provided for clarity.

The use of the terms "a" and "an" and "the" and similar referents (especially in the context of the claims) are to be construed to cover both the singular and the plural, unless otherwise indicated herein or clearly contradicted by context. The terms first, second etc. as used herein are not meant to denote any particular ordering, but simply for convenience to denote a plurality of, for example, layers. The terms "comprising", "having", "including", and "containing" are to be construed as open-ended terms (i.e., meaning "including, but not limited to") unless otherwise noted.

"About" or "approximately" as used herein is inclusive of the stated value and means within an acceptable range of deviation for the particular value as determined by one of ordinary skill in the art, considering the measurement in question and the error associated with measurement of the particular quantity (i.e., the limitations of the measurement system). For example, "about" can mean within one or more standard deviations, or within ± 10% or ± 5% of the stated value. Recitation of ranges of values are merely intended to serve as a shorthand method of referring individually to each separate value falling within the range, unless otherwise indicated herein, and each separate value is incorporated into the specification as if it were individually recited herein. The endpoints of all ranges are included within the range and independently combinable. It is understood that where a parameter range is provided, all integers within that range, and tenths thereof, are also provided. For example, "0.1-80%" includes 0.1%, 0.2%, 0.3%, etc. up to 80%.

All methods described herein can be performed in a suitable order unless otherwise indicated herein or otherwise clearly contradicted by context. The use of any and all examples, or exemplary language (e.g., "such as"), is intended merely to better illustrate the invention and does not pose a limitation on the scope of the invention unless otherwise claimed. No language in the specification should be construed as indicating any non-claimed element as essential to the practice of the invention as used herein.

As used herein the term "plant" or "crop" refers to whole plants, plant organs (e.g. leaves, stems, twigs, roots, trunks, limbs, shoots, fruits etc.), plant cells, or plant seeds. This term also encompasses plant crops such as fruits.

The term "plant" may further include the propagation material thereof, which may include all the generative parts of the plant such as seeds and vegetative plant material such as cuttings and tubers, which can be used for the multiplication of the plant. This includes seeds, tubers, spores, corms, bulbs, rhizomes, sprouts basal shoots, stolons, and buds and other parts of plants, including seedlings and young plants, which are to be transplanted after germination or after emergence from soil.

The term "locus" as used herein denotes the vicinity or area designated for growth of a desired crop, and in which control of the spread of weeds is desired. The locus includes the vicinity of desired crop plants wherein weeds have either emerged or are most likely to emerge or are yet to emerge.

As used herein, "effective amount" is an amount of active ingredient such as an herbicide which has an adverse effect on a weed. The adverse effect includes one or more of a deviation from natural development, killing of the weed, structural damage to the weed, desiccation, and/or growth retardation.

As used herein, an "agriculturally acceptable salt" means a salt which is known and accepted for use in agricultural or horticultural use.

As used herein, the term "stable" refers to chemical and/or physical stabilization of an active compound (e.g., herbicide).

"Alkyl" as used herein means a straight or branched chain saturated aliphatic hydrocarbon having the specified number of carbon atoms. Alkyl groups include, for example, groups having from 1 to 50 carbon atoms (C1 to C50 alkyl). "Dialkyl" means a compound including two alkyl groups in the molecule.

"Alkali metal" means a metal of Group 1 of the Periodic Table of the Elements, i.e., lithium, sodium, potassium, rubidium, cesium, and francium. "Alkaline-earth metal" means a metal of Group 2 of the Periodic Table of the Elements, i.e., beryllium, magnesium, calcium, strontium, barium, and radium.

Cyclohexanedione oximes are effective herbicides. Therefore, the terms "cyclohexanedione oxime herbicide", "cyclohexanedione oxime" and "cyclohexanedione oxime compound" are used interchangeably in the present disclosure.

The terms "polysorbates" or "polyoxyethylene sorbitan esters" are used interchangeably to refer to compounds that are synthesized by the addition of ethylene oxide to a sorbitan fatty acid ester via polymerization. These "polyoxyethylene sorbitan esters" are referred to also as polysorbates.

As used herein, an aromatic fluid-based solvent refers to a highly aromatic, naphthalene depleted, C9-C10 aromatic hydrocarbon solvent.

As used herein, a "methyl ester solvent" is a mixture of long chain fatty acid methyl esters, for example, a mixture of C16-18 alkyl unsaturated-fatty acid methyl ester and C18 alkyl-unsaturated fatty acid methyl ester. In an aspect, the methyl ester solvent is a mixture of unsaturated (C16-C18)-alkylcarboxylic acid methyl esters and unsaturated (C18)-alkylcarboxylic acid methyl esters, which are vegetable oil derivatives. An example of the methyl ester solvent includes methyl soyate.

The terms "percent recovery" or "% recovery" refer to the amount of active cyclohexenedione oxime herbicide (e.g., clethodim) remaining in the stable herbicidal composition of the present disclosure after storing the composition for a defined period of time under Accelerated Heat Stability (AHS) conditions (about 54°C) and/or low temperature conditions (e.g., about -10°C).

The term "emulsion stability" refers to the system's ability to resist changes in its physicochemical properties over a time interval.

As previously mentioned, herbicidal compositions comprising a cyclohexenone oxime herbicide, e.g. clethodim, as an active ingredient are difficult to formulate since these compounds tend to be chemically unstable in a herbicidal composition. The presence of adjuvant materials, surfactants, and even water, for example, can lead to significant chemical degradation of clethodim in an herbicidal composition. **In** view of chemical stability being a commercially desirable factor, various solutions have been proposed in the prior art to stabilize a cyclohexenone oxime such as clethodim in the formulation.

PCT Publication No. WO 2007/050090 discloses a stable composition comprising clethodim and a mixture of fatty acid C1-C8 alkyl esters, non-ionic surfactant, polyoxyethylene (POE) derivatives of tallow or plant oils, POE sorbitan esters, ethylene oxide-propylene oxide (EO-PO) block polymers, POE alkylphenols, polyoxyalkylene polyaryl ethers, ethoxylated alcohols, POE fatty acid esters, alkyl polyglycosides, alkyl polysaccharides, POE fatty amines, and polymeric surfactants. The composition excludes two specific anionic surfactants: dialkyl metal sulfosuccinates and metal alkylaromatic sulfonates. These compositions, having significant amounts of a fatty acid methyl ester adjuvant and POE tallow amine ether sulfate, play a role in imparting chemical stability over an extended period of time.

PCT Publication No. WO 2011/011265 discloses a composition comprising a cyclohexenedione oxime herbicide and an effective amount of a stabilizer comprising an epoxidized oil fatty acid or an epoxidized ester of a fatty acid. It also discloses one or more of a phosphoric mono and/or di-ester of long-chain alcohols having 14 to 22 carbon atoms and the salts thereof, phosphoric mono-and di-esters of alkylene oxide addition products of long-chain alcohols having 14 to 22 carbon atoms and the salts thereof, alkyl sulfates having 14 to 22 carbon atoms, polyoxyethylene alkyl ether sulfates of alcohols having 14 to 22 carbon atoms, alkane sulfonates having 14 to 22 carbon atoms, and olefin sulfonates having 14 to 22 carbon atoms as anionic surfactants; and ethoxylated fatty acids, alcohol ethoxylates, tristyrylphenol ethoxylates and ethoxylated sorbitan fatty acid esters, and mixtures thereof.

PCT Publication No. WO2016/196130 discloses a stable composition comprising a cyclohexenedione oxime compound or agriculturally acceptable salt; and an effective amount of one or more stabilizing surfactants ; wherein the composition is substantially free of an epoxidized oil fatty acid or an epoxidized ester of a fatty acid. According to WO2016/196130, the presence of anionic surfactants such as sulfonic acid derivatives, alcohol ethoxylates, alkylphenol ether prevented clethodim from degradation and the presence of alkyl benzene sulfonic acid or its salts alone or in combination with non-ionic surfactants resulted into higher degradation of clethodim.

The inventors of the present disclosure have unexpectedly found that a stable composition of cyclohexenedione oxime herbicide can be obtained through the use of a stabilizer system comprising a dialkyl metal sulfosuccinate and one or more non-ionic surfactants such as sorbitan fatty acid esters in a ratio ranging from 1:10 to 10:1, preferably from 1:5 to 5:1.

As used herein, the term "ratio" refers to a weight ratio. Within the said ratio range, the stabilizer system comprising dialkyl metal sulfosuccinate and the non-ionic surfactants, i.e. sorbitan fatty acid esters prevents degradation of the cyclohexenedione oxime herbicide in the liquid composition and has high stability during the preparation, storage and application process of the composition.

The said stable herbicidal composition also has an efficient % recovery of the cyclohexenedione oxime herbicide and good emulsion stability.

Thus, the present invention provides a stable herbicidal composition comprising:
(a) at least one cyclohexenedione oxime herbicide or an agriculturally acceptable salt thereof; and
(b) a stabilizer system comprising a dialkyl metal sulfosuccinate and at least one non-ionic surfactant.

In a preferred embodiment, the present disclosure provides a stable herbicidal composition comprising,
(a) at least one cyclohexenedione oxime herbicide or an agriculturally acceptable salt thereof; and
(b) a stabilizer system comprising a dialkyl metal sulfosuccinate and at least one non-ionic surfactant in a ratio of 1:10 to 10:1.

In an embodiment, the cyclohexenedione oxime herbicide comprises alloxydim, butroxydim, clethodim, cloproxydim, cycloxydim, profoxydim, sethoxydim, tepraloxydim, tralkoxydim, an agriculturally acceptable salt thereof, or a combination thereof.

In an embodiment, the cyclohexenedione oxime herbicide in the stable herbicidal composition is clethodim.

In an embodiment, the cyclohexenedione oxime herbicide in the stable herbicidal composition is sethoxydim.

In an embodiment, the stable herbicidal composition comprises from about 0.1% weight per weight (w/w) to about 70% w/w, or from about 1% w/w to about 60% w/w, of the cyclohexanedione oxime based on the total weight of the stable herbicidal composition.

In an embodiment, the stable herbicidal composition comprises the cyclohexanedione oxime herbicide in an amount from about 5 % w/w to about 50% w/w, based on the total weight of the stable herbicidal composition.

In an embodiment, the stable herbicidal composition comprises from about 10 % w/w to about 40%, or about 10% w/w to about 30% w/w, or about 10% w/w to about 20% w/w of the cyclohexanedione oxime herbicide, based on the total weight of the stable herbicidal composition.

In an embodiment, the stable herbicidal composition comprises a stabilizer system.

According to an embodiment, the present disclosure provides a stabilizer system comprising a dialkyl metal sulfosuccinate and a non-ionic surfactant.

In an embodiment, the stabilizer system comprises a dialkyl metal sulfosuccinate and a sorbitan fatty acid ester.

Therefore, in an embodiment the present disclosure provides a stable herbicidal composition comprising:
(a) at least one cyclohexenedione oxime herbicide or an agriculturally acceptable salt thereof; and
(b) a stabilizer system comprising a dialkyl metal sulfosuccinate and a sorbitan fatty acid ester.

In an embodiment, the stabilizer system comprises a dialkyl metal sulfosuccinate and a sorbitan fatty acid ester in a ratio of 1:100 to 100:1.

In an embodiment, the stabilizer system comprises a dialkyl metal sulfosuccinate and a sorbitan fatty acid ester in a ratio of 1:10 to 10:1.

In an embodiment, the stabilizer system comprises a dialkyl metal sulfosuccinate and a sorbitan fatty acid ester in a ratio of 1:5 to 5:1.

In an embodiment, the stabilizer system comprises a dialkyl metal sulfosuccinate and sorbitan fatty acid ester in a ratio of 1:2 to 2:1.

In an embodiment, the stabilizer system comprises a dialkyl metal sulfosuccinates and a sorbitan fatty acid ester in a ratio of 1:1.

In an embodiment, the stable herbicidal composition comprises from about 0.01% w/w to about 60% w/w, or from about 0.1% w/w to about 50% w/w, of the stabilizer system based on the total weight of the stable herbicidal composition.

In a preferred embodiment, the stable herbicidal composition comprises from about 5% w/w to about 30% w/w of the stabilizer system, based on the total weight of the stable herbicidal composition.

In an embodiment, the stabilizer system comprises a dialkyl metal sulfosuccinate.

In an embodiment, the stabilizer system comprises a dialkyl metal sulfosuccinate comprising a C₆-C₁₂ dialkyl alkali metal sulfosuccinate, a C₆-C₁₂ dialkyl alkaline earth metal sulfosuccinate, or a combination thereof.

In an embodiment, the dialkyl metal sulfosuccinate comprises dioctyl sodium sulfosuccinate, dioctyl calcium sulfosuccinate, dioctyl lithium sulfosuccinate, dioctyl barium sulfosuccinate, dioctyl potassium sulfosuccinate, dioctyl magnesium sulfosuccinate, or a combination thereof.

In an embodiment, the dialkyl metal sulfosuccinate comprises or consists of dioctyl sodium sulfosuccinate.

In an embodiment, the dialkyl metal sulfosuccinate comprises or consists of dioctyl calcium sulfosuccinate.

In an embodiment, the dialkyl metal sulfosuccinate comprises or consists of dioctyl magnesium sulfosuccinate.

In an embodiment, the stable herbicidal composition comprises from about 0.01% w/w to about 50% w/w, or from about 0.1% w/w to about 40% w/w, or from about 0.5% w/w to about 30% w/w of the dialkyl metal sulfosuccinate, based on the total weight of the stable herbicidal composition.

In a preferred embodiment, the stable herbicidal composition comprises from about 1% w/w to about 20% w/w of the dialkyl metal sulfosuccinate based on the total weight of the stable herbicidal composition.

According to an embodiment, the non-ionic surfactant comprises an ethoxylated fatty acid, an alcohol ethoxylate, tristyrylphenol ethoxylate, a sorbitan fatty acid ester, an ethoxylated sorbitan fatty acid ester, or a combination thereof. Examples of the ethoxylated sorbitan fatty acid ester include polyoxyethylene sorbitan esters widely known as polysorbates. A sorbitan fatty acid ester is a mono-, di-, or tri-ester of fatty acids linked to sorbitan.

In an embodiment, the non-ionic surfactant is a sorbitan fatty acid ester.

In an embodiment, the stabilizer system comprises a sorbitan fatty acid ester.

In an embodiment, the sorbitan fatty acid ester comprises a polyoxyethylene sorbitan fatty acid ester which is synthesized by the addition of one or more ethylene oxide groups to a sorbitan fatty acid ester via a polymerization reaction.

In an embodiment, the sorbitan fatty acid ester comprises polysorbate 20, polysorbate 60, polysorbate 65, polysorbate 80, or a combination thereof. Polysorbates 20, 60, 65, and 80 utilize lauric acid, monostearate, tristearate, and oleate, respectively, for the fatty acid portion of the molecule.

In an embodiment, the sorbitan fatty acid ester is polysorbate 80, wherein the total number of poly(ethylene glycol) units is 20 and a single terminal is capped by an oleoyl group.

In an embodiment, the stable herbicidal composition comprises from about 0.01% w/w to about 50% w/w, or from about 0.1% w/w to about 40% w/w, or from about 0.5% w/w to about 30% w/w of the sorbitan fatty acid ester based on the total weight of the stable herbicidal composition.

In an embodiment, the stable herbicidal composition comprises from about 1% w/w to about 20% w/w of the sorbitan fatty acid ester, or about 1% w/w to about 10% w/w based on the total weight of the stable herbicidal composition.

In an embodiment, the stable herbicidal composition comprises:
(i) at least one cyclohexenedione oxime herbicide or an agriculturally acceptable salt thereof; and
(ii) a stabilizer system comprising a dialkyl metal sulfosuccinate and a sorbitan fatty acid ester in a ratio of 1:10 to 10:1.

In an embodiment, the stabilizer system comprises a dialkyl metal sulfosuccinate and a sorbitan fatty acid ester in a ratio of 1:5 to 5:1.

In an embodiment, the stabilizer system comprises a dialkyl metal sulfosuccinate and a sorbitan fatty acid ester in a ratio of 1:1.

In an embodiment, the cyclohexenedione oxime herbicide is clethodim and the stabilizer system comprises a dialkyl metal sulfosuccinate and a sorbitan fatty acid ester in a ratio of 1:10 to 10:1, or in a ratio of 1:5 to 5:1.

In an embodiment, the cyclohexenedione oxime herbicide is clethodim or an agriculturally acceptable salt thereof and the stabilizer system comprises the dialkyl metal sulfosuccinate and the sorbitan fatty acid ester in a ratio of 1:5 to 5:1.

In an embodiment, the cyclohexenedione oxime herbicide is clethodim or an agriculturally acceptable salt thereof; and the stabilizer system comprises the dialkyl metal sulfosuccinate and the sorbitan fatty acid ester in a ratio of 1:1.

In an embodiment, the cyclohexenedione oxime herbicide is clethodim or an agriculturally acceptable salt thereof and the stabilizer system comprises sodium dioctyl sulfosuccinate and polysorbate 80 in a ratio of 1:10 to 10:1.

In an embodiment, the cyclohexenedione oxime herbicide is clethodim or an agriculturally acceptable salt thereof and the stabilizer system comprises sodium dioctyl sulfosuccinate and polysorbate 80 in a ratio of 1:5 to 5:1.

In an embodiment, the cyclohexenedione oxime herbicide is clethodim or an agriculturally acceptable salt thereof and the stabilizer system comprises sodium dioctyl sulfosuccinate and polysorbate 80 in a ratio of 1: 1.

In an embodiment, the cyclohexenedione oxime herbicide is sethoxydim or an agriculturally acceptable salt thereof, and the stabilizer system comprises sodium dioctyl sulfosuccinate and polysorbate 80 in a ratio of 1:10 to 10:1.

In an embodiment, the cyclohexenedione oxime herbicide is sethoxydim or an agriculturally acceptable salt thereof, and the stabilizer system comprises sodium dioctyl sulfosuccinate and polysorbate 80 in a ratio of 1:5 to 5:1.

In an embodiment, the cyclohexenedione oxime herbicide is sethoxydim or an agriculturally acceptable salt thereof, and the stabilizer system comprises sodium dioctyl sulfosuccinate and polysorbate 80 in a ratio of 1:1.

In a further embodiment, the stable herbicidal composition may further comprise a solvent.

In an embodiment, the stable herbicidal composition comprises a solvent comprising a non-polar water-immiscible solvent, a polar aprotic water miscible organic solvent, or a combination thereof.

In an embodiment, the solvent in the stable herbicidal composition comprises a non-polar water-immiscible solvent, for example, a substituted or unsubstituted aromatic or aliphatic hydrocarbon, a substituted or unsubstituted alkyl ester of a plant oil, or a combination thereof thereof.

Non-limiting examples of aromatic hydrocarbons include benzene or substituted benzene derivatives such as toluene, xylene, 1,2,4-trimethylbenzene, naphthalene, a mixture of naphthalene and 1,2,4-trimethylbenzene, or a combination thereof. Specific examples include: aromatic 150, aromatic 200, a heavy aromatic naptha solvent containing <10% naphthalene and <1.7% 1,2,4-trimethylbenzene, or a combination thereof.

In an embodiment, the solvent in the stable herbicidal composition is a C1-C4 alkyl ester of a C5-C20 saturated or unsaturated fatty acid, a mixture of such esters, a C₆-C₂₀-fatty acid monoglyceride, a C6-C20-fatty acid diglyceride, and/or a C6-C20-fatty acid triglyceride. In an embodiment, the solvent is a methyl ester of a C5-C20 saturated or unsaturated fatty acid.

In an embodiment, the C1-C4 alkyl ester (preferably methyl ester) of a C₅-C₂₀ saturated or unsaturated fatty acid or a mixture of such esters from plant oils include, without limitation, methyl, ethyl and butyl esters of canola (*B. napus*) oil, linseed oil, safflower (Carthamus tinctorius L) oil, soybean oil, sunflower oil, or a combination thereof.

In an embodiment, the solvent in the stable herbicidal composition is at least one methyl ester of a C₅-C₂₀ fatty acid.

In an embodiment, the solvent in the stable herbicidal composition is a mixture of C16-18 unsaturated fatty acid methyl esters and C18-unsaturated fatty acid methyl esters.

In an embodiment, the solvent in the stable herbicidal composition is a water-miscible polar aprotic solvent including, for example, a C1-C10 alkyl lactate, isopropyl lactate, a C1-C10 alkyl carbonate, polyethylene glycol, polyethylene glycol C1-C10 alkyl ether, polypropylene glycol, polypropylene glycol C1-C10 alkyl ethers, or a combination thereof.

In an embodiment, the stable herbicidal composition comprises from about 1% w/w to about 99% w/w, or from about 10% w/w to about 90% w/w solvent, based on the total weight of the stable herbicidal composition.

In an embodiment, the stable herbicidal composition comprises from about 30% w/w to about 80% w/w solvent based on the total weight of the stable herbicidal composition.

In an embodiment, the stable herbicidal composition may further include an additional herbicide. The type of herbicide is not limited.

In an embodiment, the stable herbicidal composition may further include one or more safeners. The type of safener is not limited.

In an embodiment, the stable herbicidal composition may include one or more adjuvants comprising surfactants (emulsifier), crop oil, fertilizers, dispersing agents, compatibility agents, foaming activators, foam suppressants, correctives, spray colorants (dyes), or a combination thereof.

In an embodiment, the stable herbicidal composition comprises from about 0.1% w/w to about 30% w/w, or from about 0.5% w/w to about 25% w/w of an adjuvant, based on the total weight of the stable herbicidal composition.

In an embodiment, the stable herbicidal composition is formulated as a liquid composition. The liquid composition includes, but is not limited to, an emulsifiable concentrate (EC), a soluble liquid (SL), a microemulsion (ME), a suspension concentrate (SC), a capsule suspension (CS), a combination of capsule suspension and suspension concentrate as ZC, or any combination thereof.

According to an embodiment of the present disclosure, the stable herbicidal composition is formulated as an emulsifiable concentrate (EC).

In an embodiment, the stable herbicidal composition of the present invention is formulated as a solid composition including, but not limited to, dust, powder, granules, pellets, tablets, dry flowable, wettable powder, water dispersible granules (WDG), or a combination thereof.

The stable composition of the present disclosure may further comprise one or more auxiliary agents selected from dispersants, wetting agents, fillers, surfactants, anticaking agents, pH-regulating agents, preservatives, biocides, antifoaming agents, colorants, and other formulation aids.

Exemplary dispersants include ionic and nonionic dispersants such as salts of polystyrene sulphonic acids, salts of polyvinylsulphonic acids, salts of naphthalene sulphonic acid/formaldehyde condensates, salts of condensates of naphthalene sulphonic acid, phenolsulphonic acid and formaldehyde, and salts of lignosulphonic acid, such as sodium lignosulphonate and modified sodium lignosulfonate; polyethylene oxide/polypropylene oxide block copolymers, polyethylene glycol ethers of linear alcohols, reaction products of fatty acids with ethylene oxide and/or propylene oxide, polyvinyl alcohol, polyvinylpyrrolidone, copolymers of polyvinyl alcohol and polyvinylpyrrolidone, copolymers of (meth)acrylic acid and (meth)acrylic esters, alkyl ethoxylates, alkylarylethoxylates, ethoxylated alkylarylphosphated, a sulphated ester, or any combination thereof.

Exemplary wetting agents include soaps, silicone oil, magnesium stearate, salts of aliphatic monoesters of sulphuric acid including but not limited to sodium lauryl sulphate; sulfoakylamides and salts thereof including but not limited to N-methyl-N-oleoyltaurate sodium salt; alkylarylsulfonates including but not limited to akylbenzenesulfonates, akylnaphthalenesulfonates and salts thereof; and salts of ligninsulfonic acid including but not limited to sodium diisopropyl naphthalene sulfonate.

Exemplary fillers include insoluble fillers and soluble fillers such as silica, amorphous silica, fumed diatomaceous earth kaolin, clay, and bentonite.

Exemplary antifoams include silicones, long-chain alcohols, and salts of fatty acids.

Exemplary colorants include, for example, red, blue and green colorants and are, preferably pigments, which are sparingly soluble in water, and dyes, which are water-soluble. Examples are inorganic coloring agents such as iron oxide, titanium oxide, and iron hexacyanoferrate, and organic coloring agents such as alizarin, and azo and phthalocyanin coloring agents.

In an embodiment, the stable herbicidal composition comprises,
(i) about 0.1% w/w to about 70% w/w cyclohexenedione oxime herbicide and
(ii) about 0.01% w/w to about 60% w/w of a stabilizer system,
wherein the said stabilizer system comprises from about 0.01% w/w to about 50% w/w dialkyl metal sulfosuccinate and from about 0.01% w/w to about 50% w/w sorbitan fatty acid ester, each based on the total weight of the stable herbicidal composition.

In an embodiment, the stable herbicidal composition comprises,
(i) about 1% w/w to about 50% w/w cyclohexenedione oxime herbicide, and
(ii) about 1% w/w to about 50% w/w stabilizer system,
wherein the stabilizer system comprises from about 0.5% w/w to about 30% w/w dialkyl metal sulfosuccinate and from about 0.5% w/w to about 30% w/w sorbitan fatty acid ester, each based on the total weight of the stable herbicidal composition.

In an embodiment, the stable herbicidal composition comprises,
(i) about 10% w/w to about 40% w/w cyclohexenedione oxime herbicide, and
(ii) about 1% w/w to about 10% w/w stabilizer system,
wherein the stabilizer system comprises from about 0.5% w/w to about 30% w/w dialkyl metal sulfosuccinate and from about 0.5% w/w to about 30% w/w sorbitan fatty acid ester, each based on the total weight of the stable herbicidal composition.

In an embodiment, the stable herbicidal composition comprises from about 1% w/w to about 50% w/w, or about 10% w/w to about 40% w/w of cyclohexenedione oxime herbicide and 1% w/w to about 50% w/w or about 1% w/w to about 10% of a stabilizer system, wherein the stabilizer system comprises from about 0.5% w/w to about 30% w/w dialkyl metal sulfosuccinate and from about 0.5% w/w to about 30% w/w sorbitan fatty acid ester, each based on the total weight of the stable herbicidal composition, and wherein the stable herbicidal composition is an emulsifiable concentrate (EC).

In an embodiment the present disclosure provides a process of preparing a stable herbicidal composition, the process comprising:
providing a stabilizer system comprising a dialkyl metal sulfosuccinate, a non-ionic surfactant, a solvent, and optionally one or more auxiliary ingredients; and
adding a cyclohexenedione oxime or agriculturally acceptable salt thereof to the stabilizer system to provide the stable herbicidal composition, wherein the stabilizer system comprises the dialkyl metal sulfosuccinate and the sorbitan fatty acid ester in a ratio of 1:10 to 10:1.

In an embodiment, the stabilizer system comprises the dialkyl metal sulfosuccinate and the sorbitan fatty acid ester in a ratio of 1:5 to 5:1.

In an embodiment, the process of preparing the stable herbicidal composition further comprises:
a) mixing the solvent, the dialkyl metal sulfosuccinate, the sorbitan fatty acid ester, and optionally one or more auxiliary ingredients to form the stabilizer system; and
b) adding the cyclohexenedione oxime herbicide to the stabilizer system to obtain the stable herbicidal composition.

In an embodiment the present disclosure provides a process of preparing a stable herbicidal composition, the process comprising:
a) mixing a solvent, a dialkyl metal sulfosuccinate, a sorbitan fatty acid ester, and optionally one or more auxiliary ingredients to form a stabilizer mixture;
b) adding to the stabilizer mixture a cyclohexenedione oxime herbicide under low shear; and
c) emulsifying the mixture under low shear to obtain stable herbicidal composition as emulsifiable concentrate (EC).

As used herein "low shear" refers to mixing which occurs through non-turbulent (e.g., smooth or laminar-type) flow. For example, low shear conditions are present when the mixing of the materials occurs at a low speed and the material's particles move in an orderly fashion throughout the mixer without inducing turbulence in the mixture.

According to an embodiment of the present disclosure, formation of the stabilizer system by mixing the solvent, dialkyl metal sulfosuccinate, and sorbitan fatty acid ester is carried out under low shear to facilitate emulsification.

According to an embodiment of the present disclosure, the addition of the cyclohexenedione oxime and optionally an additional herbicide into the stabilizer system is also carried out under low shear to obtain the final EC composition according to the present invention.

According to an embodiment of the present disclosure, the mixing and emulsification steps in the process are carried out at a temperature in the range of about 20° C. to about 80° C., or from about 20° C. to about 70° C.

According to an embodiment of the present disclosure, emulsification is carried out for a period of about 30 seconds to about 24 hours; or from about five minutes to about three hours.

According to an embodiment of the present disclosure, the average size of the particles of the cyclohexenedione oxime herbicide (e.g., clethodim) is from about 0.01 µm to about 100 µm, or from about 0.01 µm to about 10 µm.

According to an embodiment of the present disclosure, operating conditions to yield particles of a desired size will depend on a variety of factors, including, where applicable, the temperature at which the emulsification is performed, the addition rate of the components of the stabilizer system, the type of solvent, and the particular active ingredients, reactants, the emulsifying equipment used, the amount of emulsifiers used, and the like.

According to an embodiment of the present disclosure, a method of controlling weeds, comprises applying an effective amount of a herbicidal composition to a weed, a crop, a locus, or a habitat area, the herbicidal composition comprising;
at least one cyclohexenedione oxime or an agriculturally acceptable salt thereof; and
a stabilizer system comprising a dialkyl metal sulfosuccinate and a non-ionic surfactant in a ratio of 1:10 to 10:1.

According to an embodiment of the present disclosure, the stabilizer system comprises the dialkyl metal sulfosuccinate and the non-ionic surfactant in a ratio of 1:5 to 5:1.

According to an embodiment of the present disclosure, the stabilizer system comprises the dialkyl metal sulfosuccinate and a sorbitan fatty acid ester in a ratio of 1:5 to 5:1.

According to an embodiment of the present disclosure, a method of controlling weeds, comprises applying an effective amount of a herbicidal composition to a weed, a crop, a locus, or a habitat area, the herbicidal composition comprising:
(i) clethodim; and
(ii) a stabilizer system comprising dialkyl metal sulfosuccinate and sorbitan fatty acid ester in a ratio of 1:10 to 10:1, or in a ratio of 1:5 to 5:1.

According to an embodiment of the present disclosure, the % recovery of the amount of active cyclohexenedione oxime herbicide remaining in the stable herbicidal composition of the present disclosure after storing the composition for a defined period of 14 days under Accelerated Heat Stability (AHS) conditions (about 54°C) and/or low temperature conditions (e.g., about -10°C) is in the range of 95% to 100% indicating efficient stability of the composition.

According to an embodiment of the present disclosure, the % recovery of the amount of the active, i.e. clethodim remaining in the stable herbicidal composition of the present disclosure after storing the composition for a defined period of 14 days under Accelerated Heat Stability (AHS) conditions (about 54°C) and/or low temperature conditions (e.g., about - 10°C) is in the range of 96% to 99%, thus indicating the efficient stability of the composition.

In compositions without the non-ionic surfactant the % reduction of the amount of the active, i.e. clethodim remaining in the stable herbicidal composition of the present disclosure after storing the composition for a defined period of 14 days under Accelerated Heat Stability (AHS) conditions (about 54°C) and/or low temperature conditions (e.g., about -10°C) is at least 8%, therefore indicating that such compositions are unstable.

According to an embodiment of the present disclosure, the stable herbicidal composition is used to control a wide range of weeds.

According to an embodiment of the present disclosure, the stable herbicidal composition is used to control a broad spectrum of annual and perennial weeds at pre-emergence and post-emergence stages.

According to an embodiment of the present disclosure, the form of the stable herbicidal composition allows the active compounds to be effectively taken up by the plants.

According to an embodiment of the present disclosure, the stable herbicidal composition is used as the source of active agrochemical ingredients and will typically be diluted to provide an end-use formulation, typically a spray formulation. The herbicidal composition may be diluted with water from 1 to 10,000, particularly 10 to 1,000 times the total weight of the stable herbicidal composition to form the spray formulation. The stable herbicidal composition may be diluted prior to use to provide an agrochemical active concentration of about 0.5 weight percent (wt.%) to about 1 wt.%. In said diluted composition the agrochemical active concentration may be in the range from about 0.001 wt.% to about 1 wt.% of the total formulation as sprayed.

Spray formulations include all the components which are desired to apply to the plants or their environment. Spray formulations can be made up by simple dilution of the stable herbicidal composition containing agrochemically active ingredients, by mixing of the individual agrochemically active ingredients, or by a combination of diluting a stable herbicidal composition and adding further individual agrochemically active ingredients or mixtures of agrochemically active ingredients. Typically, such end use mixing is carried out in the tank from which the formulation is sprayed, or alternatively in a holding tank for filling the spray tank. Such mixing and mixtures are typically termed tank mixing and tank mixtures.

According to an embodiment of the present disclosure, a kit comprising a stable agrochemical composition is provided. The kit comprises a plurality of components, including at least one of the ingredients of the stable herbicidal composition of the present invention.

According to an embodiment of the present disclosure, a kit comprises:
at least one cyclohexenedione oxime herbicide or an agriculturally acceptable salt thereof; and
a stabilizer system comprising a dialkyl metal sulfosuccinate and a sorbitan fatty acid ester in a ratio of 1:10 to 10:1.

According to an embodiment of the present disclosure, the kit comprises at least one cyclohexenedione oxime herbicide or an agriculturally acceptable salt thereof; and a stabilizer system comprising the dialkyl metal sulfosuccinate and the sorbitan fatty acid ester in a ratio of 1:5 to 5:1.

In one embodiment of the present disclosure, the kit may include at least one, or all of components that may be used to prepare the stable herbicidal composition. For example, the kit may include the cyclohexenedione herbicide, another herbicide, and a stabilizer system comprising dialkyl metal sulfosuccinate and sorbitan fatty acid ester. One or more of the components may already be combined or pre-formulated. In those embodiments where more than two components are provided in a kit, the components may already be combined and as such are packaged in a single container such as a vial, bottle, can, pouch, bag and/or canister.

In other embodiments, two or more components of a kit may be packaged separately, i.e., not pre-formulated. As such, a kit may include one or more separate containers such as vials, cans, bottles, pouches, bags and/or canisters, each container containing a separate component for stable herbicidal composition.

In both forms, a component of the kit may be applied separately from or together with the further components or as a component of a combination composition according to the invention for preparing the stable herbicidal composition according to the invention.

It will be understood that the specification and examples are illustrative but not limitative of the present disclosure and that other embodiments within the spirit and scope of the invention will suggest themselves to those skilled in the art. Other embodiments can be practiced that are also within the scope of the present invention. The following examples illustrate the invention, but by no means intend to limit the scope of the claims.

### EXAMPLES

The disclosure will be illustrated with reference to the following examples.

### Example 1: Preparation of Clethodim 120g/L Emulsifiable Concentrate (EC)

**Table 1**

| Ingredient | Quantity (% w/w) |
|---|---|
| Clethodim | 13.09 |
| Methyl ester solvent | 48.85 |
| Sodium dioctyl sulfosuccinate | 5.00 |
| Polysorbate 80 | 5.00 |
| Aromatic fluid-based solvent | 28.06 |
| TOTAL | 100 |

The materials in Table 1 were used to prepare the herbicidal composition of Example 1. In particular, 48.85 g of methyl ester solvent and 28.06 g of an aromatic fluid-based solvent were mixed with a separately prepared stabilizer system obtained by mixing 5 g sodium dioctyl sulfosuccinate and 5 g polysorbate 80 under low shear to obtain a mixture. 13.09 g of clethodim was then added to the mixture under low shear to obtain clear amber liquid as a stable emulsifiable concentrate.

### Example 2: Preparation of Clethodim 120g/L Emulsifiable Concentrate (EC)

**Table 2**

| Ingredient | Quantity (% w/w) |
|---|---|
| Clethodim | 12 |
| Methyl ester solvent | 48.85 |
| Sodium dioctyl sulfosuccinate | 2.5 |
| Polysorbate 80 | 2.5 |
| Aromatic fluid-based solvent | 34.15 |
| TOTAL | 100 |

The materials in Table 2 were used to prepare the herbicidal composition of Example 2. Clethodim, methyl ester solvent, sodium dioctyl sulfosuccinate, polysorbate 80, and aromatic fluid-based solvent were mixed in the concentrations as shown in Table 2 above and an EC composition was were prepared as per the process of Example 1.

### Example 3: Preparation of Clethodim 120g/L Emulsifiable Concentrate (EC)

**Table 3**

| Ingredient | Quantity (% w/w) |
|---|---|
| Clethodim | 12 |
| Methyl ester solvent | 48.85 |
| Sodium dioctyl sulfosuccinate | 3.75 |
| Polysorbate 80 | 3.75 |
| Aromatic fluid-based solvent | 31.65 |
| TOTAL | 100 |

The materials in Table 3 were used to prepare the herbicidal composition of Example 3. Clethodim, methyl ester solvent, sodium dioctyl sulfosuccinate, polysorbate 80 and aromatic fluid-based solvent were mixed in a given ratio shown in Table 3 above and EC composition was prepared as per the process of Example 1.

### Example 4: Preparation of Clethodim 120g/L Emulsifiable Concentrate (EC) (comparative example)

**Table 4**

| Ingredient | Quantity (% w/w) |
|---|---|
| Clethodim | 12 |
| Methyl ester solvent | 44.8 |
| Sodium dioctyl sulfosuccinate | 3.33 |
| Castor oil ethoxylate (40 EO) | 6.66 |
| Aromatic fluid-based solvent | 33.21 |
| TOTAL | 100 |

The materials in Table 4 were used to prepare the herbicidal composition of Example 4. Clethodim, Methyl ester solvent, sodium dioctyl sulfosuccinate, castor oil ethoxylate (40 EO), and the aromatic fluid-based solvent were mixed in a given ratio shown in Table 4 and EC composition was were prepared as per the process of Example 1.

### Stability of formulations containing clethodim (14 days period) and stability of product upon dilution

The EC compositions of Example-1 to Example-4 were prepared as described above. Stability of clethodim in the EC compositions as well as stability of the emulsion after dilution was studied.

It was found that the EC compositions of Example-1, Example-2, and Example-3 remained quite stable at 0 days storage in ambient conditions (room temperature and ambient relative humidity), i.e. just after the preparation. These EC compositions were also studied after storage for 14 days in Accelerated Heat Stability (AHS) conditions (temperature of 54°C) and in low temperature conditions (at -10°C). As shown in Table 5, clethodim degradation in Examples 1-3 was within an acceptable range after storage at both the high temperature (AHS) and low temperature conditions. However, the EC composition of Example-4 showed greater clethodim degradation (the % change, i.e. the % reduction of clethodim in the composition was 8.21%) that made the system quite unstable.

Emulsion stability upon dilution was also studied at a dilution rate of 2%. The emulsion obtained by diluting the compositions of Example-1, Example-2, and Example-3 remained stable after 1 hour as well as after 24 hours of dilution, and storage at room temperature. After 1 hour, the amount of creaming was the least in Examples 1-3. In both conditions (1 hour and 24 hours), the amount of creaming in Example-1 remained under control, i.e. less than 1 ml. This infers high stability of emulsion at end-use. Also, in the composition of Example-4 the amount of creaming remained under control, however, the composition of Example-4 is not favourable for use due to the greater percentage of clethodim degradation. (Table 5)

**Table 5**

| Example | Initial 0 days | 14 days (Clethodim Recovery) | | | Emulsion Stability (Upon dilution) | |
|---|---|---|---|---|---|---|
| | % Al | % Al - 10°C | % Al 54°C | % Change | 1 Hour | 24 Hours |
| Example-1 | 13.75 | 13.69 | 13.20 | -3.6 | 0.25 ml cream | 0.8 ml cream |
| Example-2 | N/A | 11.82 | 11.59 | -1.9 | 0.2 ml cream | 2.8 ml cream |
| Example-3 | N/A | 11.94 | 11.49 | -3.8 | Trace cream | 3 ml cream |
| Example-4 | ND | 11.39 | 10.46 | -8.21 | 0.6 ml cream | 2.8 ml cream |

| | | | | | | |
|---|---|---|---|---|---|---|
| Al: Active ingredient | | | | | | |

### Optimization of stabilization system

To study the effect of various ratios of dialkyl metal sulfosuccinate and sorbitan fatty acid ester on the stabilization system, various compositions (Example-5 to Example-11) were developed using various weight ratios such as 1:1 in Example 5-7, 3:2 in Example-8, 1:5 in Example-9, 5:1 in Example-10 and 2:3 in Example-11. It was found that when the dialkyl metal sulfosuccinate and sorbitan fatty acid ester of the stabilization system were mixed at a weight ratio of 1:5 to 5:1, clethodim remained quite stable. Also, the emulsion remains stable when tested after 1 hour as well as 24 hours (Table 6). Therefore, the stabilization system comprising dialkyl metal sulfosuccinate and sorbitan fatty acid ester was found to be effective in terms of imparting emulsion stability as well as by preventing clethodim degradation.

**Table 6**

| Ingredients (% w/w) | Ex-5 (1:1) | Ex-6 (1:1) | Ex-7 (1:1) | Ex-8 (3:2) | Ex-9 (1:5) | Ex-10 (5:1) | Ex-11 (2:3) |
|---|---|---|---|---|---|---|---|
| Clethodim | 13.85 | 13.85 | 13.85 | 13.85 | 13.85 | 13.85 | 13.85 |
| Aromatic fluid-based solvent | 27.30 | 27.30 | 27.30 | 27.30 | 27.30 | 27.30 | 27.30 |
| Agent 2416-21 | 48.85 | 48.85 | 48.85 | 48.85 | 48.85 | 48.85 | 48.85 |
| Sodium bis(2-ethyl-1-hexyl) sulfosuccinat e | 5.00 | 5.00 | 5.00 | 6.00 | 8.33 | 1.67 | 4.00 |
| Polysorbate 80 | 5.00 | - | - | 4.00 | 1.67 | 8.33 | 6.00 |
| Polysorbate 88 | - | 5.00 | - | - | - | - | - |
| Polysorbate 24 | - | - | 5.00 | - | - | - | - |
| Clethodim Recovery (%) 14 days AHS | 96.51 | 97.00 | 95.21 | 96.72 | 96.93 | 96.11 | 96.15 |
| Emulsion stability after 1 hour (ml) | 0.8 | 4.0 | 0.1 | 1.2 | 3.0 | 2.8 | 2.4 |
| Remarks | Good Clethodi m recovery & emulsion stability | Good Clethodi m recovery & moderate emulsion stability | Moderate Clethodi m recovery & good emulsion stability | Good Clethodi m recovery & moderate emulsion stability | Good Clethodi m recovery & moderate emulsion stability | Good Clethodi m recovery & emulsion stability | Good Clethodi m recovery & emulsion stability |

| | | | | | | | |
|---|---|---|---|---|---|---|---|
| *Ex-Example. | | | | | | | |

The results clearly showed that clethodim compositions including a stabilization system comprising dialkyl metal sulfosuccinate and sorbitan fatty acid ester are stable. Therefore, a stabilized herbicidal composition including a cyclohexenedione oxime herbicide and a stabilizer system comprising a dialkyl metal sulfosuccinate and a sorbitan fatty acid ester in a weight ratio of 1:5 to 5:1 has been advantageously discovered. The stabilizer system successfully stabilized the cyclohexenedione oxime herbicide, i.e., clethodim, in the composition and also imparted stability to the emulsion obtained after dilution for end-use.

The present disclosure thus provides at least the following advantages.

A stable herbicidal composition for the effective control of weeds.

A stable cyclohexenedione oxime herbicide herbicidal composition having efficient % recovery of the active and emulsion stability after storage.

The disclosed herbicidal composition improves the method of controlling growth of weeds and solves the problems associated with poor control of herbicide efficiency due to reduced recovery and emulsion stability observed in cyclohexenedione oxime herbicide compositions.

While the present subject matter has been shown and described with reference to preferred embodiments thereof, it will be understood by those skilled in the art that many alternatives, modifications and variations may be made thereto without departing from the spirit and scope thereof. Accordingly, it is intended to embrace all such alternatives, modifications, and variations that fall within the spirit and broad scope of the appended claims.

### ASPECTS OF THE INVENTION

The following are aspects of the invention, which are combinable with all other features of the invention described herein.
1. A stable herbicidal composition comprising:
   at least one cyclohexenedione oxime herbicide or an agriculturally acceptable salt thereof; and
   a stabilizer system comprising a dialkyl metal sulfosuccinate and a non-ionic surfactant.
2. The stable herbicidal composition as in clause 1, wherein the stabilizer system comprises the dialkyl metal sulfosuccinate and the non-ionic surfactant in a ratio of 1:10 to 10:1.
3. The stable herbicidal composition as in clause 1, wherein the stabilizer system comprises the dialkyl metal sulfosuccinate and the non-ionic surfactant in a ratio of 1:5 to 5:1.
4. The stable herbicidal composition as in clause 1, wherein the cyclohexenedione oxime comprises alloxydim, butroxydim, clethodim, cloproxydim, cycloxydim, profoxydim, sethoxydim, tepraloxydim, tralkoxydim, an agriculturally acceptable salt thereof, or a combination thereof.
5. The stable herbicidal composition as in clause 1, wherein the cyclohexenedione oxime comprises clethodim or an agriculturally acceptable salt thereof.
6. The stable herbicidal composition as in clause 1, wherein the dialkyl metal sulfosuccinate comprises a C₆-C₁₂ dialkyl alkali metal sulfosuccinate or a C₆-C₁₂ dialkyl alkaline earth metal sulfosuccinate.
7. The stable herbicidal composition as in clause 1, wherein the dialkyl metal sulfosuccinate comprises dioctyl sodium sulfosuccinate, dioctyl calcium sulfosuccinate, dioctyl lithium sulfosuccinate, dioctyl barium sulfosuccinate, dioctyl potassium sulfosuccinate, dioctyl magnesium sulfosuccinate, or a combination thereof.
8. The stable herbicidal composition as in clause 1, wherein the non-ionic surfactant comprises an ethoxylated fatty acid, an alcohol ethoxylate, a tristyrylphenol ethoxylate, a sorbitan fatty acid ester, an ethoxylated sorbitan fatty acid ester, or a combination thereof.
9. The stable herbicidal composition as in clause 8, wherein the non-ionic surfactant comprises the sorbitan fatty acid ester.
10. The stable herbicidal composition as in clause 9, wherein the sorbitan fatty acid ester comprises polysorbate 20, polysorbate 60, polysorbate 65, polysorbate 80, or a combination thereof.
11. The stable herbicidal composition as in clause 8, wherein the stabilization system comprises the dialkyl metal sulfosuccinate and the sorbitan fatty acid ester in a ratio of 1:5 to 5:1.
12. The stable herbicidal composition as in clause 9, wherein the stabilization system comprises the dialkyl metal sulfosuccinate and the sorbitan fatty acid ester in a ratio of 1:2.
13. The stable herbicidal composition as in clause 9, wherein the stabilization system comprises the dialkyl metal sulfosuccinate and the sorbitan fatty acid ester in a ratio of 2:1.
14. The stable herbicidal composition as in clause 9, wherein the stabilization system comprises the dialkyl metal sulfosuccinate and the sorbitan fatty acid ester in a ratio of 1:1.
15. The stable herbicidal composition as in clause 1, wherein the composition is a liquid composition.
16. The stable herbicidal composition as in clause 1, wherein the composition is an emulsifiable concentrate.
17. The stable herbicidal composition as in clause 1, wherein the composition comprises from about 0.1% w/w to about 70% w/w cyclohexenedione oxime and 0.01% w/w to about 60% w/w of the stabilizer system based on the total weight of the herbicidal composition,
   wherein the stabilizer system comprises from about 0.01% w/w to about 50% w/w of the dialkyl metal sulfosuccinate and from about 0.01% w/w to about 50% w/w of the non-ionic surfactant, based on the total weight of the the herbicidal composition.
18. A process of preparing the stable herbicidal composition as in clause 1, the process comprising:
   providing the stabilizer system comprising the dialkyl metal sulfosuccinate, the non-ionic surfactant, a solvent, and optionally, one or more auxiliary ingredients; and
   adding the cyclohexenedione oxime or agriculturally acceptable salt thereof to the stabilizer system to provide the stable herbicidal composition,
   wherein the stabilizer system comprises the dialkyl metal sulfosuccinate and the sorbitan fatty acid ester in a ratio of 1:10 to 10:1.
19. The process of preparing the stable herbicidal composition as in clause 18, wherein the process further comprises:
   mixing the solvent, the dialkyl metal sulfosuccinate, the sorbitan fatty acid ester, and optionally, the one or more auxiliary ingredients, to form the stabilizer system;
   adding the cyclohexenedione oxime to the stabilizer system under low shear, wherein the cyclohexanedione comprises clethodim; and
   emulsifying the mixture under low shear to obtain the stable herbicidal composition as an emulsifiable concentrate (EC).
20. A method of controlling weeds comprising applying an effective amount of an herbicidal composition to a weed, a crop, a locus, or a habitat area, the herbicidal composition comprising:
   at least one cyclohexenedione oxime or an agriculturally acceptable salt thereof; and a stabilizer system comprising a dialkyl metal sulfosuccinate and a non-ionic surfactant in
   a ratio of 1:10 to 10:1.
21. The method of controlling weeds as in clause 20, wherein the cyclohexenedione oxime comprises clethodim, and the stabilizer system comprises a sodium dialkyl sulfosuccinate and polysorbate 80 in a ratio of 1:10 to 10:1.
22. The method of controlling weeds as in clause 20, wherein the cyclohexenedione oxime comprises clethodim, and the stabilizer system comprises a sodium dialkyl sulfosuccinate and polysorbate 80 in a ratio of 1:5 to 5:1.
23. The method of controlling weeds as in clause 20, wherein the composition is in the form of an emulsifiable concentrate.

## Claims

1. A stable herbicidal composition comprising:
at least one cyclohexanedione oxime herbicide or an agriculturally acceptable salt thereof; and
a stabilizer system comprising a dialkyl metal sulfosuccinate and a non-ionic surfactant.

2. The stable herbicidal composition as claimed in claim 1, wherein the stabilizer system comprises the dialkyl metal sulfosuccinate and the non-ionic surfactant in a ratio of 1:10 to 10:1; preferably in a ratio of 1:5 to 5:1.

3. The stable herbicidal composition as claimed in claim 1, wherein the cyclohexanedione oxime comprises alloxydim, butroxydim, clethodim, cloproxydim, cycloxydim, profoxydim, sethoxydim, tepraloxydim, tralkoxydim, an agriculturally acceptable salt thereof, or a combination thereof; preferably wherein the cyclohexanedione oxime comprises clethodim or an agriculturally acceptable salt thereof.

4. The stable herbicidal composition as claimed in claim 1, wherein the dialkyl metal sulfosuccinate comprises a C₆-C₁₂ dialkyl alkali metal sulfosuccinate or a C₆-C₁₂ dialkyl alkaline earth metal sulfosuccinate; preferably wherein the dialkyl metal sulfosuccinate comprises dioctyl sodium sulfosuccinate, dioctyl calcium sulfosuccinate, dioctyl lithium sulfosuccinate, dioctyl barium sulfosuccinate, dioctyl potassium sulfosuccinate, dioctyl magnesium sulfosuccinate, or a combination thereof.

5. The stable herbicidal composition as claimed in claim 1, wherein the non-ionic surfactant comprises an ethoxylated fatty acid, an alcohol ethoxylate, a tristyrylphenol ethoxylate, a sorbitan fatty acid ester, an ethoxylated sorbitan fatty acid ester, or a combination thereof; preferably wherein the non-ionic surfactant comprises the sorbitan fatty acid ester.

6. The stable herbicidal composition as claimed in claim 1 wherein the non-ionic surfactant comprises a sorbitan fatty acid ester, and wherein the sorbitan fatty acid ester comprises polysorbate 20, polysorbate 60, polysorbate 65, polysorbate 80, or a combination thereof.

7. The stable herbicidal composition as claimed in claim 5, wherein the non-ionic surfactant comprises a sorbitan fatty acid ester, and the stabilization system comprises the dialkyl metal sulfosuccinate and the sorbitan fatty acid ester in a ratio of 1:5 to 5:1; preferably in a ratio of 1:2 or 2:1 or 1:1.

8. The stable herbicidal composition as claimed in claim 1, wherein the composition is a liquid composition.

9. The stable herbicidal composition as claimed in claim 1, wherein the composition is an emulsifiable concentrate.

10. The stable herbicidal composition as claimed in claim 1, wherein the composition comprises from about 0.1% w/w to about 70% w/w cyclohexanedione oxime and 0.01% w/w to about 60% w/w of the stabilizer system based on the total weight of the herbicidal composition,
wherein the stabilizer system comprises from about 0.01% w/w to about 50% w/w of the dialkyl metal sulfosuccinate and from about 0.01% w/w to about 50% w/w of the non-ionic surfactant, based on the total weight of the herbicidal composition.

11. A process of preparing the stable herbicidal composition as claimed in claim 1, the process comprising:
providing the stabilizer system comprising the dialkyl metal sulfosuccinate, the non-ionic surfactant, a solvent, and optionally, one or more auxiliary ingredients; and
adding the cyclohexanedione oxime or agriculturally acceptable salt thereof to the stabilizer system to provide the stable herbicidal composition,
wherein the stabilizer system comprises the dialkyl metal sulfosuccinate and the sorbitan fatty acid ester in a ratio of 1:10 to 10:1.

12. The process of preparing the stable herbicidal composition as claimed in claim 11, wherein the process further comprises:
mixing the solvent, the dialkyl metal sulfosuccinate, the sorbitan fatty acid ester, and optionally, the one or more auxiliary ingredients, to form the stabilizer system;
adding the cyclohexanedione oxime to the stabilizer system under low shear, wherein the cyclohexanedione comprises clethodim; and
emulsifying the mixture under low shear to obtain the stable herbicidal composition as an emulsifiable concentrate (EC).

13. A method of controlling weeds comprising applying an effective amount of an herbicidal composition to a weed, a crop, a locus, or a habitat area, the herbicidal composition comprising:
at least one cyclohexanedione oxime or an agriculturally acceptable salt thereof; and a stabilizer system comprising a dialkyl metal sulfosuccinate and a non-ionic surfactant in
a ratio of 1:10 to 10:1.

14. The method of controlling weeds as claimed in claim 13, wherein the cyclohexanedione oxime comprises clethodim, and the stabilizer system comprises a sodium dialkyl sulfosuccinate and polysorbate 80 in a ratio of 1:10 to 10:1; preferably in a ratio of 1:5 to 5:1.

15. The method of controlling weeds as claimed in claim 13, wherein the composition is in the form of an emulsifiable concentrate.
